# EUROPÄISCHE PATENTSCHRIFT

(11) **EP 2 321 603 B1**
(45) Veröffentlichungstag und Bekanntmachung des Hinweises auf die Patenterteilung: **19.06.2019**
(21) Anmeldenummer: 09741192.0
(22) Anmeldetag: 13.08.2009
(51) Int. Cl.: F27B 3/28, F27D 19/00, F27D 21/04

(54) **SONDE ZUR KONTINUIERLICHEN ABGASANALYSE**
PROBE FOR CONTINUOUSLY MEASURING EXHAUST GASES
SONDE D'ANALYSE D'EFFLUENTS GAZEUX EN CONTINU

(30) Priorität: 14.08.2008 DE 102008037719; 27.11.2008 DE 102008059179; 27.11.2008 DE 102008059180
(43) Veröffentlichungstag der Anmeldung: 18.05.2011
(73) Patentinhaber: Georgsmarienhütte GmbH, 49124 Georgsmarienhütte (DE)
(72) Erfinder: DENG, Jianxiong, 49074 Osnabrück (DE); KOLM, Ingo, 49124 Georgsmarienhütte (DE)
(74) Vertreter: Busse & Busse
(86) Internationale Anmeldenummer: PCT/DE2009/001130
(87) Internationale Veröffentlichungsnummer: WO 2010/017812

(56) Entgegenhaltungen:
- DE-A1- 1 936 649
- JP-A- 2003 344 237
- US-A- 5 344 122
- US-A- 5 777 241
- US-A1- 2003 206 571
- US-A1- 2006 202 123
- KIRSCHEN M ET AL: "ABGASMESSUNGEN AN PRIMAERENTSTAUBUNGSANLAGEN VON LICHTBOGENOEFEN//OFF-GAS MEASUREMENTS AT PRIMARY DEDUSTING SYSTEMS OF ELECTRIC ARC FURNACES" STAHL UND EISEN, VERLAG STAHLEISEN, DUSSELDORF, DE, Bd. 124, Nr. 11, 12. November 2004 (2004-11-12), Seite 73/74,76,79/80,82,84,86,88/89, XP001211980 ISSN: 0340-4803
- KUEHN R ET AL: "KONTINUIERLICHE ABGASANALYSE UND ENERGIEBILANZ BEI DER ELEKTROSTAHLERZEUGUNG//CONTINUOUS OFF-GAS ANALYSIS AND ENERGY BALANCE FOR ELECTRIC STEELMAKING" STAHL UND EISEN, VERLAG STAHLEISEN, DUSSELDORF, DE, Bd. 125, Nr. 4, 15. April 2005 (2005-04-15), Seiten 51-54,56, XP001235899 ISSN: 0340-4803

## Beschreibung

Die Erfindung betrifft eine Sonde zur kontinuierlichen Abgasanalyse an Gefäßen zur Erschmelzung von Metall, insbesondere an Elektroöfen für die Stahlerzeugung.

Obwohl die Erfindung nicht auf die Elektrostahlerzeugung beschränkt ist, wird sie am Beispiel derselben im Folgenden beschrieben.

Auf den Stahlerzeugungsprozess im Elektroofen (Lichtbogenofen) wirkt die inhomogene und von Charge zu Charge variierende Zusammensetzung des Schrotts als Störgröße. Eine allgemein gültige Strategie für die Zugabe von Sauerstoff und fossilen Energieträgern kann somit nicht für jede Schmelze das Optimum darstellen.

Durch eine kontinuierliche Abgasanalyse mit hoher Verfügbarkeit lassen sich Kenngrößen aus einer in Echtzeit gerechneten Leistungsbilanz des Prozesses ermitteln. Für die Bediener der Anlage werden damit die Vorgänge im Ofen transparent und ein Reagieren auf wechselnde Betriebszustände wird ermöglicht. Ein derartiges Verfahren ist beispielsweise in dem Artikel "Abgasmessungen an Primärentstaubungsanlagen von Lichtbogenöfen, Kirschen M. et al., Stahl und Eisen, VOL. 124, Nr. 11 vom 12.11.2004 beschrieben.

Es ist bekannt, bei einer derartigen Analyse eine lanzenartige Sonde in das eine Teil der Abgasleitung aus dem Ofengefäß bildende Klappstück einzuführen. Derartige lanzenartige Sonden sind beispielsweise aus US-A 5 344 122, US-A 2006/202123, US-A 5777 241 sowie JP-A 2003 344237 bekannt US-A 2003 206 571 offenbart eine Sonde für kontinuierliche Abgasanalyse an einem Lichtbogenofen, die in der Wand des Ofens durch eine Flansche angeflanscht ist, wobei schließt die Öffnung der Sonde mit der Wand des Ofens ab.

Derartige Lanzen haben bezüglich der Messgenauigkeit, der Anfälligkeit gegen Störfaktoren wie Temperatur, Verschmutzung etc. erhebliche Nachteile, da sie relativ weit in den Abgasstrom hineinreichen und eine relativ geringe Messoberfläche bieten.

Es hat sich jedoch herausgestellt, dass die durch den Spalt zwischen Krümmer und Klappstück angesaugte Falschluft das Analyseergebnis verfälschen kann.

Der Erfindung liegt daher die Aufgabe zugrunde, eine Sonde der eingangs genannten Art so auszubilden, dass sie äußerst robust ist und kontinuierlich eine relativ große Menge des zu analysierenden Abgases entnehmen kann.

Eine weitere Aufgabe der Erfindung liegt darin, einen Einsatzort dieser Sonde anzugeben, der eine möglichst unverfälschte Messung ermöglicht.

Die Erfindung löst den ersten Teil dieser Aufgabe durch einen zylinderförmigen Körper, dessen eines Ende offen und von einem Befestigungsflansch umgeben ist, wobei die Sondenöffnung mit dem Innenwand des Entnahmeortes abschließt, während das entgegengesetzte Ende verschließbar ist und knapp unterhalb des verschließbaren Endes zumindest ein Anschlussstutzen für die Leitung zu einer Abgasanalysevorrichtung und eine Sondenkühlung vorgesehen ist, mit einer Kühlmittelzuführungsleitung und einer Kühlmittelabführungsleitung, wobei die Höhe der Kühlung bezogen auf die Gesamtlänge der Sonde unterhalb von 50 % liegt.

Dadurch, dass sich die Wasserkühlung lediglich auf den unteren Bereich der Sonde beschränkt ergibt sich der Vorteil, dass das von maximal 1800°C heruntergekühlte zu analysierende Gas im Bereich oberhalb der Kühlung nicht unter den Taupunkt herabgekühlt wird, so dass der im Abgas vorhandene Wasserdampf nicht kondensieren kann.

Somit ist eine derartig ausgestaltete Sonde auch zur Wasserdampfmessung geeignet.

Das verschließbare Ende der Sonde kann mit einer Leitung zur Rückspülung mittels eines Gases, beispielsweise Stickstoff, verbunden werden. Diese Rückspülung dient in Prozesspausen, z.B. bei einem Chargiervorgang, zur Reinigung der Sonde.

Dies betrifft insbesondere die Sondenöffnung, die durch anhaftende Schlacken verstopfen könnte.

Bei bisher bekannten Sonden fand diese Rückspülung mit einem Druck bis höchstens 6 bar statt.

Mit der erfindungsgemäßen Sonde ist ein Druck möglich, der wesentlich höher als 6 bar sein kann, beispielsweise 13 bar.

Der zweite Teil der der Erfindung zugrunde liegende Aufgabe wird durch die Angeabe eines Messorts gelöst, an dem die zur Durchführung der kontinuierlichen Abgasanalyse vorgesehene Sonde fest mit dem Gefäßdeckel eines Schmelzgefäßes vorhandenen Krümmer angeflanscht ist, wobei der Krümmer zusammen mit einem relativ zu diesem schwenkbaren Klappstück die Abgasleitung des Gefäßes bildet. Die Analyse erfolgt vorteilhaft mit einem Massenspektrometer. Die Sondenöffnung schließt dabei mit der Innenwand des Krümmers ab.

Das Abgas wird mittels mindestens einer am Krümmer montierten Sonde aufgenommen, anschließend einem Aufbereitungsprozess unterworfen und analysiert.

Unter Aufbereitung des Abgases versteht man zunächst eine Grobfilterung mit anschließender Wasserabscheidung, die jedoch nicht immer zwingend erforderlich ist. Daraufhin gelangt das Abgas durch einen Feinfilter über eine Vakuumpumpe in den Analysator.

Die Analyse bezieht sich in erster Linie auf CO, CO₂, H₂, CH₄ zur Überwachung der Verbrennung.

Weiterhin wird die Probe auf O₂, sowie N₂ analysiert.

Der besondere Vorteil des Einsatzes des Massenspektrometers zur Analyse ist seine Fähigkeit auch seltene Gaskomponenten wie Ar und He zu analysieren.

Diese Gase können als Tracer zur Bestimmung der Abgas- und Falschluftrate mittels Massenbilanz dienen. Werden die Berechnungen unabhängig voneinander entweder mittels der Argonbilanz oder der Heliumbilanz mittels des erfindungsgemäßen Verfahrens ausgeführt, ergeben sich jeweils dieselben Flussraten für Abgas und Falschluft. Hieraus kann geschlossen werden, dass das Gas an der Analysestelle gut durchgemischt ist, ein Indiz dafür, dass der angegebene Messort optimal ist.

Zur Entnahme der Abgasprobe wird eine Sonde benutzt, die aus einem zylindrischen Rohrstück besteht. Am entgegengesetzten Ende ist das Rohr verschließbar ausgebildet. In der Zylinderwand unterhalb des verschließbaren Endes ist mindestens ein Anschlussstutzen für die Leitung des zu messenden Abgases zur Analyse vorgesehen.

Die Erfindung wird im Folgenden anhand von Zeichnungen dargestellt und erläutert.

Es zeigt
- Fig. 1: den prinzipiellen Aufbau einer Anlage zur Abgasanalyse
- Fig. 2: in schematischer Darstellung eine hierfür geeignet Sonde.

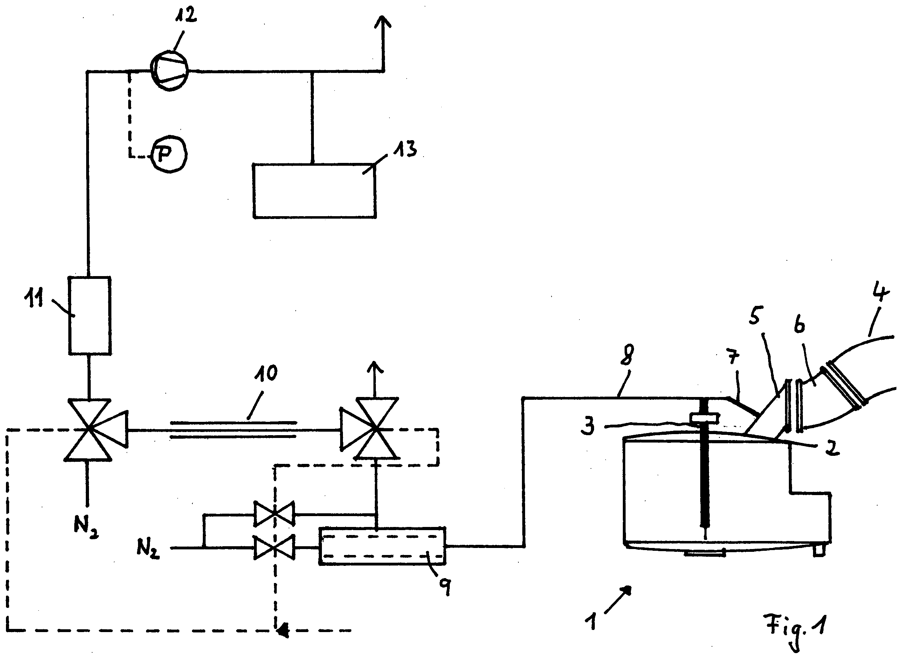

In der Figur 1 ist eine Anlage zur Abgasanalyse an einem Elektro-Lichtbogenofen zur Stahlerzeugung dargestellt.

Der Elektroofen ist mit dem Bezugszeichen 1 versehen.

Das Ofengefäß ist mittels eines Deckels 2 verschlossen. Die Elektrode ist mit dem Bezugszeichen 3 versehen.

Das während des Schmelzvorgangs erzeugte Abgas wird über eine Abgasleitung 4 nach außen abgeführt.

Diese Leitung 4 besteht aus einem am Ofendeckel 2 fest angeordneten Krümmer 5 und einem gegenüber diesem Krümmer verschwenkbaren Klappstück 6, welches beim Abstichvorgang seitlich weggeklappt wird, und der gesamte Ofen gekippt wird, wobei naturgemäß auch der Krümmer 5 diese Kippbewegung mitmacht.

Zwischen Krümmer 5 und Klappstück 6 befindet sich daher auch ein Spalt, durch den von außen Falschluft in den Abgasstrom eingesaugt wird.

Auf den Krümmer 5 ist eine lediglich angedeutete Sonde 7 aufgeflanscht. Die Sonde 7 ist mit einer Leitung 8 über einen Grobfilter 9, optional einen Wasserabscheider 10, einen Feinfilter 11 und eine Vakuumpumpe 12 mit einem Massenspektrometer 13 verbunden, in dem das aufbereitete Abgas analysiert wird. Andere Analysengeräte sind natürlich möglich.

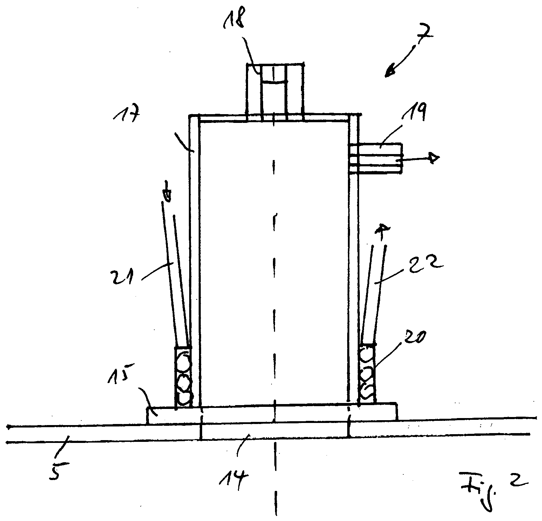

In der Figur 2 ist in schematisierter Form eine für die Abgasanalyse geeignete Sonde 7 dargestellt.

Am Entnahmeort der Abgasprobe ist um eine Öffnung 14 in der Wand des Entnahmeorts die zylinderförmige Sonde 7 mittels eines Flansches 15 anmontiert.

Der zylinderförmige Körper 17 der Sonde 7 ist an seinem oberen Ende verschlossen, jedoch mit einem Anschlussstutzen 18 versehen, an den eine Stickstoffleitung zur Rückspülung der Anlage angeschlossen werden kann.

Knapp unterhalb des verschlossenen Endes befindet sich in der Zylinderwand ein Anschlussstutzen 19 zum Anschluss der Leitung 8 zur Analyseapparatur.

Es ist in der Schemaskizze lediglich ein Anschlussstutzen 19 dargestellt. Es können aber auch mehrere sein, so dass bei entsprechend ungünstigen Platzverhältnissen die Leitung 8 wahlweise an den geeigneteren Anschlussstutzen angeschlossen werden kann.

Im vorliegenden Ausführungsbeispiel ist im unteren Bereich der Sonde diese von einer Kühlvorrichtung 20 umgeben. Das Kühlmittel, z. B Wasser, gelangt durch die Zuführung 21 in die Kühlvorrichtung 20 und durch die Abflussleitung 22 wieder heraus.

Wenn der Kühlbereich in Bezug auf die Gesamtlänge der Sonde weniger als 50% ausmacht, ist die Sonde auch zur Messung von Wasserdampf geeignet.

Dies ergibt sich daraus, dass das durch die Kühlvorrichtung 20 von maximal 1800°C herab gekühlte Gas auf seinem Weg zum Stutzen 19 nicht so weit gekühlt werden kann, dass der im Abgas befindliche Wasserdampf kondensiert.

Wenn die Sonde nicht zur Wasserdampfmessung eingesetzt werden soll, kann sie auch über die gesamte Länge gekühlt sein.

## Patentansprüche

1. Sonde zur kontinuierlichen Abgasanalyse an Gefäßen zur Erschmelzung von Metallen, insbesondere an Elektroöfen (1) für die Stahlerzeugung, **gekennzeichnet durch** einen zylinderförmigen Körper (17), welcher mit einem offenen Ende mittels eines Flansches (15) um eine Öffnung (14) herum in der Wand des Entnahmeortes befestigbar ist, wobei das offene Ende der zylinderförmigen Sonde (7) mit der Innenwand des Entnahmeortes abschließt, während das entgegengesetzte Ende verschließbar ist und knapp unterhalb des verschließbaren Endes zumindest ein Anschlussstutzen (18) für die Leitung (8) zu einer Analysevorrichtung und eine Sondenkühlung (20) vorgesehen ist mit einer Kühlmittelzuführungsleitung (21) und einer Kühlmittelabführungsleitung (22), wobei die Höhe der Kühlung bezogen auf die Gesamtlänge der Sonde (7) unterhalb von 50 % liegt.

2. Sonde nach Anspruch 1, **dadurch gekennzeichnet, dass** am verschließbaren Ende der Sonde (7) ein Anschlussstutzen (18) vorgesehen ist, an den eine Gasleitung zum Spülen und Reinigen der Sonde (7) anschließbar ist.

3. Sonde nach Anspruch 1 oder 2 für die kontinuierliche Abgasanalyse insbesondere an Elektroöfen für die Stahlerzeugung und insbesondere mittels Massenspektrometer (13), wobei die im Gefäß anfallenden Abgase über eine Abgasleitung aus dem geschlossenen Gefäß abgeführt werden, welche aus einem fest mit dem Gefäßdeckel (2) verbundenen Krümmer (5) und einem relativ zu diesem verschwenkbaren Klappstück (6) besteht, **dadurch gekennzeichnet, dass** die Messsonde (7) auf eine Öffnung (14) in der Wand des Krümmers (5) angeflanscht ist und die Öffnung der Sonde (7) mit der Innenwand des Krümmers (5) abschließt.

## Claims

1. Probe for continuous exhaust gas analysis of vessels for melting metals, in particular of electric furnaces (1) for steel production, **characterised by** a cylindrical body (17), an open end of which can be fastened in the wall of the collection location by means of a flange (15) around an opening (14), the open end of the cylindrical probe (7) being flush with the inner wall of the collection location, while the opposite end can be closed and at least one connection piece (18) for connecting the line (8) to an analysis device and a probe cooling means (20) being provided slightly below the closable end with a coolant supply line (21) and a coolant discharge line (22), the height of the cooling means relative to the total length of the probe (7) being below 50%.

2. Probe according to claim 1, **characterised in that** a connection piece (18) is provided at the closable end of the probe (7), to which connection piece a gas line for rinsing and cleaning the probe (7) can be connected.

3. Probe according to either claim 1 or 2 for continuous exhaust gas analysis in particular of electric furnaces for steel production and in particular by means of mass spectrometers (13), the resulting waste gases in the vessel being discharged from the closed vessel via an exhaust pipe, which consists of a manifold (5) rigidly connected to the vessel lid (2) and a hinged piece (6) that is pivotable relative thereto, **characterised in that** the measuring probe (7) is flanged to an opening (14) in the wall of the manifold (5) and the opening of the probe (7) is flush with the inner wall of the manifold (5).

## Revendications

1. Sonde pour une analyse continue des fumées sur des cuves destinées à la fusion de métaux, en particulier sur des fours électriques (1) destinés à la production d'acier, **caractérisée par** un corps cylindrique (17) pouvant être fixé au moyen d'une bride (15) par une extrémité ouverte autour d'une ouverture (14) dans la paroi du lieu de prélèvement, dans laquelle l'extrémité ouverte de la sonde cylindrique (7) arrive à la paroi intérieure du lieu de prélèvement alors que l'extrémité opposée peut être fermée, et juste au-dessous de l'extrémité pouvant être fermée, au moins un raccord (18) pour la conduite (8) menant à un dispositif d'analyse et un dispositif de refroidissement de sonde (20) avec une conduite d'amenée de produit réfrigérant (21) et une conduite d'évacuation de produit réfrigérant (22) sont prévus, dans laquelle la hauteur du dispositif de refroidissement par rapport à la longueur totale de la sonde (7) est inférieure à 50 %.

2. Sonde selon la revendication 1, **caractérisée en ce qu'**à l'extrémité pouvant être fermée de la sonde (7) est prévu un raccord (18) pouvant être connecté à une conduite de gaz pour le rinçage et le nettoyage de la sonde (7).

3. Sonde selon la revendication 1 ou 2 pour l'analyse continue des fumées, en particulier sur des fours électriques destinés à la production d'acier et en particulier au moyen d'un spectromètre de masse (13), dans laquelle les fumées produites dans la cuve sont évacuées de la cuve fermée par une conduite de fumées composée d'un coude (5) solidaire du couvercle de cuve (2) et d'une pièce basculante (5) pivotante par rapport à celui-ci, **caractérisée en ce que** la sonde de mesure (7) est bridée sur une ouverture (14) dans la paroi du coude (5) et l'ouverture de la sonde (7) arrive à la paroi intérieure du coude (5).
